# EUROPEAN PATENT SPECIFICATION

(11) **EP 1 767 885 B1**
(45) Date of publication and mention of the grant of the patent: **23.03.2011**
(21) Application number: 06120902.9
(22) Date of filing: 19.09.2006
(51) Int. Cl.: F27D 5/00, C04B 35/597, C04B 35/584, C04B 35/565, C04B 35/573

(54) **Kiln furniture for use in a non-oxidizing atmosphere**
Ausstattung für Brennofen zur Verwendung in einer nicht-oxidierenden Atmosphäre
Accessoires pour fours de cuission à utiliser dans une atmosphère non-oxydante

(30) Priority: 31.08.2006 JP 2006236628; 21.09.2005 JP 2005273476
(43) Date of publication of application: 28.03.2007
(73) Proprietor: NGK Insulators, Ltd., Nagoya-shi, Aichi 467-8530 (JP); NGK Adrec Co., Ltd., Kani-gun, Gifu 505-0112 (JP)
(72) Inventor: Komiyama Tsuneo, Nagoya-shi, Gifu 467-8530 (JP); Yamakawa, Osamu, Kani-gun Gifu 505-0112 (JP); Hori, Seiichi, Kani-gun Gifu 505-0112 (JP)
(74) Representative: TBK-Patent

(56) References cited:
- US-A- 5 338 576
- US-A- 5 840 436

## Description

### BACKGROUND OF THE INVENTION

### Field of the Invention

The present invention relates to kiln supplies suited for use in a non-oxidizing atmosphere.

### Description of the Related Art

Silicon carbide (SiC) refractories have occupied an industrially important position because of having excellent heat resistance and fire resistance. They have been used frequently for, for example, shelf boards, jigs and sheaths used for firing potteries. Such SiC refractories have conventionally been manufactured by mixing from about 5 to 10 mass% of clay with SiC particles, and after kneading, molding or forming, and firing, bonding the SiC particles together with a silicate mineral such as a clay mineral. The SiC refractories thus manufactured however have a problem that deformation by softening or oxidation tends to occur at high temperatures because a clay mineral having low firing resistance is used for grain boundary bonding.

There is therefore disclosed a preparation process of a silicon nitride SiC refractory (silicon nitride bonded silicon carbide refractory) by mixing Si with SiC particles, molding or forming the resulting mixture, and firing the resulting molded or formed product in a non-oxidizing nitrogen-containing atmosphere (refer to Japanese Patent No. 2655699). In order to improve the high-temperature mechanical strength and thermal shock resistance of this SiC refractory, SiC particles are bonded with a bonding material made of silicon nitride. Even the SiC refractory prepared by the method as described in this patent document however is not satisfactory in the properties such as high temperature strength and thermal shock resistance.

With a view to overcoming the above-described problem, disclosed is an SiC refractory (silicon nitride bonded silicon carbide refractory) having from 60 to 90 mass% of SiC aggregate particles, from 8 to 35 mass% of a grain boundary bonding portion composed of Si₃N₄ and/or Si₂ON₂, from 1.0 to 15.0 mass% of a grain boundary vitreous phase and/or crystalline phase, and from 0.05 to 2.0 mass% of a metal Si (refer to Japanese Patent Publication No. 47507/1995). This SiC refractory has improved high-temperature strength and thermal shock resistance by incorporating from 0.05 to 5.0 mass% of a metal Si therein.

When the conventional silicon nitride bonded silicon carbide refractory (refer to Japanese Patent No. 2655699 or Japanese Patent Publication No. 47507/1995) is used in the surrounding atmosphere, it can exhibit its excellent properties fully. When the refractory is used in a non-oxidizing atmosphere having an oxygen concentration not greater than 1000 ppm, on the other hand, a marked deterioration in strength occurs in a short time compared with the use of it in the surrounding atmosphere and the refractory is finally broken. Thus, it has the drawback of very short actual service life.

### SUMMARY OF THE INVENTION

The present invention has been made in consideration of the above-described problems of the related art. An object of the present invention is to provide a kiln furniture for use in a non-oxidizing atmosphere, which kiln furniture causes neither a significant deterioration in strength nor breakage even if it is used in a non-oxidizing atmosphere having an oxygen concentration of 1000 ppm or less and at the same time has a significantly extended actual service life.

[1] A kiln furniture for use in a non-oxidizing atmosphere, wherein the kiln furniture is made of a refractory having an aggregate portion containing SiC and an aggregate bonding portion containing from 5 to 25 mass% of Si₃N₄ and/or Si₂N₂O and containing from 0.12 to 3 mass % of inorganic oxides other than a silicon oxynitride and silicon oxide, from 0.5 to 6.7 mass% of SiO₂, and the rest of SiC, wherein the inorganic oxides contain, as elemental components thereof, from 0.06 to 1 mass% of Al, from 0.3 to 0.5 mass% of Fe, from 0.003 to 0.01 mass% of Ca, from 0.004 to 0.01 mass% of Ni, from 0.0008 to 0.01 mass% of Zr and from 0.5 to 3 mass% of O..

[2] A kiln furniture for use in a non-oxidizing atmosphere according to [1], wherein the inorganic oxides are present in a major part of the aggregate bonding portion.

[3] A kiln furniture for use in a non-oxidizing atmosphere according to any one of [1] or [2], which has an open porosity of from 5 to 14%.

[4] A kiln furniture for use in a non-oxidizing atmosphere according to any one of [1] to [3], which has a bending strength decreasing rate not exceeding 15%.

The kiln furniture for use in a non-oxidizing atmosphere according to the present invention causes neither a significant deterioration in strength or breakage even if it is used in a non-oxidizing atmosphere having an oxygen concentration of 1000 ppm or less and at the same time, has a significantly extended actual service life.

### DESCRIPTION OF THE PREFERRED EMBODIMENTS

The kiln furniture for use in a non-oxidizing atmosphere according to the present invention will next be described specifically. It should however be borne in mind that the present invention is not construed as being limited thereto and various changes, modifications and improvements can be added thereto based on the knowledge of those skilled in the art without departing from the scope of the present invention.

The kiln furniture for use in a non-oxidizing atmosphere according to the present invention is composed mainly of SiC and Si₃N₄ and/or Si₂N₂O, contains from 0.12 to 3.0 mass% of inorganic oxides other than silicon oxynitride and silicon oxide. The term "non-oxidizing atmosphere" means an atmosphere having an oxygen concentration of 1 to 1000 ppm.

The kiln furniture for use in a non-oxidizing atmosphere according to the present invention preferably contains from 69 to 89 mass% of SiC as an aggregate and from 5 to 25 mass% of Si₃N₄ and/or Si₂N₂O as an aggregate bonding portion. In the refractory of the present invention, SiC exists as an aggregate, and Si₃N₄ and/or Si₂N₂O exist(s) as the secondary phase at the aggregate bonding portion. When the amount of SiC serving as the primary phase is below the above-described range, the resulting refractory cannot have sufficient thermal shock resistance and strength (bending strength and Young's modulus). When it exceeds the above-described range, on the other hand, the resulting refractory cannot exhibit sufficient strength because the secondary phase constituting the bonding portion decreases in proportion.

The kiln furniture for use in a non-oxidizing atmosphere according to the present invention is mainly characterized in that it is made of a refractory containing preferably from 69 to 89 mass% of SiC in the aggregate portion thereof and from 5 to 25 mass% of Si₃N₄ and/or Si₂N₂O in the aggregate bonding portion thereof; and among the inorganic oxides present in the refractory, the amounts of Al₂O₃ and SiO₂ are adjusted to from 0.1 to 1.9 mass% and from 0.5 to 6.7 mass%, respectively. The kiln furniture of the present invention usually contains, in the aggregate portion thereof, almost no inorganic oxide (near 0%) and it is preferred that most of the inorganic oxides are present in the aggregate bonding portion.

In the conventional kiln supplies made of silicon-nitride bonded silicon carbide refractory, it is general that silicon nitride is bonded to interstices among aggregates (aggregate grain boundary when the aggregate is in the form of grains) of silicon carbide, and at the same time an aggregate bonding material existing at the interstices among aggregates (aggregate grain boundary when the aggregate is in the form of grains) is oxidized, and the resulting oxide forms a film, whereby the aggregates are bonded together, and an effect of inhibiting continuous oxidation is given to the refractory. When the conventional silicon nitride bonded silicon carbide refractory is actually used in a non-oxidizing atmosphere, successive reduction of the film-forming oxide prevents formation of a stable film on the refractory, making it difficult to realize an oxidation inhibiting effect of the refractory and making bonding of the aggregates difficult. As a result, a marked reduction in strength or breakage occurs owing to a significant deterioration of the refractory, which shortens the actual service life considerably.

In the kiln supplies of the present invention made of a silicon nitride bonded silicon carbide refractory, on the other hand, the maximum reduction in the amounts of Al₂O₃ and SiO₂, which are suppliers of an O element among the inorganic oxides present in the aggregate bonding portion, fully increases the binding force of silicon nitride at the portion where aggregates made of silicon carbide are bonded together and, at the same time, makes it possible to form a stable oxide film on the refractory. The inhibitory effect of continuous oxidation can therefore be given to the refractory so that the kiln furniture causes neither marked deterioration in strength nor breakage even if it is used in a non-oxidizing atmosphere having an oxygen concentration of 1000 ppm or less and, at the same time, has a significantly extended actual service life.

The refractory to be used in the present invention contains, as elemental components of the inorganic oxides, from 0.06 to 1 mass% of Al, from 0.03 to 0.5 mass% of Fe, from 0.003 to 0.01 mass% of Ca, from 0.004 to 0.01 mass% of Ni, from 0.0008 to 0.01 mass% of Zr and from 0.5 to 3 mass% of O (these contents are each a proportion in the whole refractory). When the contents of the elemental components exceed the above-described ranges, they are reduced during use, which accelerates deterioration. When they are below the above-described ranges, on the other hand, the strength of the bonding portion lowers or a strong glass component is not formed on the surface brought into contact with the atmosphere, which also accelerates deterioration.

The refractory to be used in the present invention preferably has an open porosity of from 5 to 14%. When the porosity is excessively large, a specific surface area to be brought into contact with the atmospheric gas increases, resulting in the reduction of the refractory by the atmosphere and acceleration of its deterioration. When the porosity is excessively small, on the other hand, a rate at which deterioration proceeds is low, but lowering in the thermal shock resistance occurs. Thus, the refractory having a porosity outside the above-described range is therefore not suited for use.

In addition, the refractory to be used in the present invention preferably has a bending strength decreasing rate not exceeding 15%.

The term "bending strength decreasing rate" as used herein means a change rate (%) of a bending strength of a kiln furniture after actually used by maintaining at 1400°C for 200 hours in an inert gas atmosphere (low oxygen atmosphere) having an oxygen concentration of 500 ppm compared to a bending strength before the actual use. The bending strength is determined by the four-point bending test as specified in the JIS standard (JIS R 1601).

In the refractory to be used in the present invention, SiC serving as the aggregate has preferably a maximum particle size of 2000 µm or less, more preferably from 50 to 300 µm. In the case that SiC has a maximum particle size of below 50 µm, when SiC particles having a maximum particle size of 50 µm or greater are present in the tissue, they can prevent the growth of microcracks which will otherwise occur owing to the application of a thermal stress to the refractory. When SiC particles having a maximum particle size less than 50 µm are present, on the other hand, cracks tend to grow in the grain boundary. This occurs drastically and lowers thermal shock resistance. When the SiC aggregate has a maximum particle size exceeding 300 µm, the resulting refractory has difficulty in obtaining sufficient thermal shock resistance and strength (bending strength and Young' modulus).

A manufacturing process of the refractory (silicon nitride bonded silicon carbide refractory) to be used in the present invention will next be described. The refractory for use in the present invention is manufactured by the steps such as preparation of raw materials, mixing, casting, mold release, drying, firing (firing in a nitrogen atmosphere), oxidative firing and inspection.

The refractory to be used in the present invention is preferably molded by casting. In the manufacturing process of the refractory of the present invention, employment of casting makes it possible to improve the density(non-porosity) of the resulting molded product so that the refractory after firing has improved strength (bending strength and Young's modulus).

The refractory to be used in the present invention is manufactured preferably by firing at from 1350 to 1500°C substantially in a nitrogen atmosphere for 1 to 30 hours. In the manufacturing process of the refractory of the present invention, aggregates can be bonded together by silicon carbide formed by the reaction between Si in the molded product with nitrogen in the atmosphere and a silicon oxynitride formed from a trace amount of oxygen, each formed at the grain boundary of SiC particles serving as the aggregate.

The kiln furniture for use in a non-oxidizing atmosphere according to the present invention is more preferably a re-crystallized SiC fired body substantially composed of from 0.01 to 2 mass% of SiO₂ and 99.99 to 98 mass% of SiC because it causes neither significant deterioration in strength nor breakage even in a non-oxidizing atmosphere having an oxygen concentration of 1000 ppm or less (preferably, 500 ppm or less) and has a long service life.

The present invention will next be described more specifically based on some examples. It should however be borne in mind that the present invention is not limited to or by them.

### (Examples 1 and 2, Comparative Examples 1 and 2)

To a main raw material obtained by mixing 85 mass% of silicon carbide and 15 mass% of silicon, auxiliary agents (dispersing agent and binder) and water were added, whereby respective raw materials were prepared. The raw materials thus obtained were each charged and mixed in a trommel. The resulting slip obtained by mixing in the trommel was injected into a gypsum mold. Water in the slip was absorbed into the gypsum mold, whereby a molded product was obtained as a cake of a predetermined thickness (from 6 to 8 mm) attached to the mold.

The resulting molded product was taken out from the gypsum mold. After drying the molded product to remove water therefrom, the dried molded product was fired at 1400°C for 10 hours in a nitrogen atmosphere. The fired body thus obtained was then subjected to oxidative firing at 1450°C for 10 hours in the surrounding atmosphere. As the last step, the size and appearance defects such as splits were inspected. Kiln supplies made of respective silicon nitride bonded silicon carbide refractories were thus obtained as products (Examples 1 and 2, Comparative Examples 1 and 2).

### (Examples 3 to 7, Comparative Examples 3 to 7)

To a main material obtained by mixing 85 mass% of silicon carbide and 15 mass% of silicon, an auxiliary agent (binder) and water were added, followed by kneading in a kneader. The kneaded mass thus obtained was press molded into a molded product having a predetermined thickness (from 6 to 8 mm).

After drying to remove the water content therefrom, the resulting dried molded product was fired at 1400°C for 10 hours in a nitrogen atmosphere. The fired body thus obtained was subjected to oxidative firing at 1450°C for 10 hours in the surrounding atmosphere. As the last step, the size and appearance defects such as splits were inspected. Kiln supplies made of silicon nitride bonded silicon carbide refractories were thus obtained as products (Examples 3 to 7, Comparative Examples 3 to 9).

The content (mass%) of inorganic oxide other than a silicon oxynitride and silicon oxide, content (mass%) of SiC contained in an aggregate portion, content (mass%) of Si₃N₄ + Si₂N₂O in the respective kiln supplies (Examples 1 to 7 and Comparative Example 1 to 9) as an aggregate bonding portion, and contents (mass%) of Al₂O₃ and SiO₂ contained in the inorganic oxides present in the aggregate bonding portion are shown in Table 1. The content of the aggregate bonding portion is a proportion of it in each kiln furniture.

**[Table 1]**

| | Inorganic oxides other than an silicon oxynitride and silicon oxide | Main component of aggregate portion of [mass%] | Main component of aggregate bonding portion (mass%) Si₃N₄ + Si₂N₂O | Al₂O₃ in inorganic oxides present in aggregate bonding portion [mass%] | SiO₂ in inorganic oxides present in aggregate bonding portion [mass%] |
|---|---|---|---|---|---|
| Ex.1 | 0.980 | 88.642 | 5.125 | 0.166 | 4.938 |
| Ex. 2 | 1.877 | 69.702 | 24.988 | 1.170 | 3.216 |
| Ex. 3 | 2.555 | 75.513 | 18.755 | 1.830 | 2.867 |
| Ex. 4 | 0.771 | 79.930 | 18.420 | 0.120 | 0.576 |
| Ex. 5 | 0.900 | 76.835 | 18.216 | 0.119 | 3.825 |
| Ex. 6 | 0.828 | 79.080 | 19.045 | 0.134 | 0.703 |
| Ex. 7 | 0.951 | 76.028 | 18.833 | 0.131 | 3.912 |
| Comp. Ex. 1 | 5.089 | 86.422 | 26.025 | 4.547 | 1.998 |
| Comp. Ex. 2 | 2.760 | 77.256 | 19.148 | 2.028 | 0.494 |
| Comp. Ex. 3 | 3.420 | 73.821 | 18.944 | 2.498 | 3.448 |
| Comp. Ex. 4 | 1.470 | 76.052 | 17.652 | 0.491 | 4.420 |
| Comp. Ex. 5 | 0.904 | 67.844 | 28.112 | 0.119 | 2.757 |
| Comp. Ex. 6 | 2.493 | 89.012 | 4.125 | 1.664 | 4.000 |
| Comp. Ex. 7 | 2.577 | 89.824 | 3.879 | 1.804 | 3.451 |
| Comp. Ex. 8 | 1.941 | 78.784 | 12.356 | 0.698 | 6.716 |
| Comp. Ex. 9 | 1.308 | 77.956 | 15.650 | 0.481 | 4.722 |

The composition of the inorganic oxides in the aggregate bonding portion of each of the kiln supplies (Examples 1 to 7, Comparative Examples 1 to 9) was analyzed by wet chemical analysis. The results of it are shown in Table 2. The inorganic oxide was formed using Al₂O₃ as an Al source, Fe₂O₃ as an Fe source, CaCO₃ as a Ca source, NiO as an Ni source, ZrO₂ as a Zr source, and an oxide raw material and/or oxidative firing as an O source.

In addition, an open porosity of the kiln supplies (obtained in Examples 1 to 7 and Comparative Examples 1 to 9) and a bending strength decreasing rate of the kiln supplies when they are used in a low temperature oxygen atmosphere are shown in Table 2. A bending strength degreasing rate of the kiln supplies in the case that an oxygen concentration in an oxygen atmosphere is varied is shown in Table 3.

**[Table 2]**

| | Chemical composition | | | | | | Density | Test results |
|---|---|---|---|---|---|---|---|---|
| | Al [mass%] | Fe [mass%] | Ca [mass%] | Ni [mass%] | Zr [mass%] | O [mass%] | Open porosity [%] | Bending strength decreasing rate after test [%] |
| Ex. 1 | 0.088 | 0.411 | 0.008 | 0.0047 | 0.0022 | 2.945 | 11 | 8.2 |
| Ex. 2 | 0.620 | 0.390 | 0.006 | 0.0050 | 0.0008 | 2.470 | 10 | 12.5 |
| Ex. 3 | 0.970 | 0.410 | 0.007 | 0.0060 | 0.0010 | 2.600 | 10 | 14.9 |
| Ex. 4 | 0.064 | 0.420 | 0.006 | 0.0050 | 0.0088 | 0.557 | 12 | 1.7 |
| Ex. 5 | 0.063 | 0.416 | 0.006 | 0.0096 | 0.0055 | 2.321 | 9 | 0.0 |
| Ex. 6 | 0.071 | 0.452 | 0.003 | 0.0088 | 0.0035 | 0.643 | 13 | 5.9 |
| Ex. 7 | 0.069 | 0.445 | 0.006 | 0.0051 | 0.0046 | 2.385 | 9 | 5.0 |
| Comp. Ex. 1 | 2.410 | 0.300 | 0.012 | 0.0070 | 0.0028 | 3.360 | 8 | 65.4 |
| Comp. Ex. 2 | 1.075 | 0.481 | 0.006 | 0.0077 | 0.0045 | 1.434 | 12 | 57.1 |
| Comp. Ex. 3 | 1.324 | 0.532 | 0.006 | 0.0050 | 0.0022 | 3.282 | 10 | 64.0 |
| Comp. Ex. 4 | 0.260 | 0.541 | 0.007 | 0.0060 | 0.0030 | 2.872 | 10 | 25.0 |
| Comp. Ex. 5 | 0.063 | 0.442 | 0.018 | 0.0080 | 0.0025 | 1.755 | 9 | 28.2 |
| Comp. Ex. 6 | 0.882 | 0.445 | 0.009 | 0.0071 | 0.0033 | 3.155 | 13 | 48.5 |
| Comp. Ex. 7 | 0.956 | 0.421 | 0.007 | 0.0114 | 0.0025 | 2.912 | 12 | 42.3 |
| Comp. Ex. 8 | 0.370 | 0.651 | 0.007 | 0.0060 | 0.0110 | 4.268 | 10 | 37.8 |
| Comp. Ex. 9 | 0.255 | 0.430 | 0.011 | 0.0075 | 0.0030 | 2.982 | 14 | 21.3 |

**[Table 3]**

| Bending strength degreasing rate | | | Unit: % |
|---|---|---|---|
| | Oxygen concentration in test atmosphere | | |
| | 1000 ppm | 500 ppm | 1 ppm |
| Ex. 1 | 15.1 | 8.2 | 4.2 |
| Ex. 2 | 14.5 | 12.5 | 12.0 |
| Ex. 3 | 14.2 | 14.9 | 15.0 |
| Ex. 4 | 1.0 | 1.7 | 2.0 |
| Ex. 5 | 2.0 | 0.0 | 0.5 |
| Ex. 6 | 8.0 | 5.9 | 4.0 |
| Ex. 7 | 3.0 | 5.0 | 5.5 |
| Comp. Ex. 1 | 40.1 | 65.4 | 40.2 |
| Comp. Ex. 2 | 58.8 | 57.1 | 40.1 |
| Comp. Ex. 3 | 40.1 | 64.0 | 45.5 |
| Comp. Ex. 4 | 26.7 | 25.0 | 20.5 |
| Comp. Ex. 5 | 37.6 | 28.2 | 22.2 |
| Comp. Ex. 6 | 53.2 | 48.5 | 37.8 |
| Comp. Ex. 7 | 55.6 | 42.3 | 35.6 |
| Comp. Ex. 8 | 48.1 | 37.8 | 33.4 |
| Comp. Ex. 9 | 25.5 | 21.3 | 18.9 |

### (Conclusion)

As shown in Tables 1 and 2, it has been found that in the kiln supplies obtained in Examples 1 to 7, a bending strength decreasing rate of the respective kiln supplies used actually in a low temperature oxygen atmosphere compared to that of the kiln supplies obtained in Comparative Examples 1 to 9 was very small because the aggregate bonding portion contains Si₃N₄ and/or Si₂N₂O in an amount of from 5 to 25 mass%; among the inorganic oxides present in the aggregate bonding portion, the amounts of Al₂O3 and SiO₂ are adjusted to from 0.1 to 1.9 mass% and from 0.5 to 6.7 mass%, respectively; and the contents of the elemental components of the inorganic oxides satisfy the following ranges: from 0.006 to 1 mass% Al, from 0.3 to 0.5 mass% Fe, from 0.003 to 0.01 mass% Ca, from 0.004 to 0.01 mass% Ni, from 0.0008 to 0.01 mass% Zr and from 0.5 to 3 mass% as O. In other words, it has been confirmed that, even in a non-oxidizing atmosphere having an oxygen concentration of 1000 ppm or less, a significant deterioration in strength or breakage can be prevented and at the same time, an actual service life can be extended greatly.

In addition, as shown in Table 3, it was found out that, even when the oxygen concentration was varied to be 1000 ppm, 500 ppm, and 1 ppm, in the kiln supplies obtained in Examples 1 to 7, a significant deterioration in bending strength compared to that of the kiln supplies obtained in Comparative Examples 1 to 9 can be inhibited.

The kiln furniture for use in a non-oxidizing atmosphere according to the present invention can suitably be used during firing, for example, in a non-oxidizing atmosphere having an oxygen concentration of 1000 ppm or less.
Provided is a kiln furniture for use in a non-oxidizing atmosphere, which has SiC and Si₃N₄ and/or Si₂N₂O as main components, contains from 0.12 to 3.0 mass% of inorganic oxides other than an silicon oxynitride and silicon oxide. The kiln furniture for use in a non-oxidizing atmosphere according to the present invention causes neither significant deterioration in strength nor breakage even if it is used in a non-oxidizing atmosphere having an oxygen concentration of 1000 ppm or less and at the same time, has a greatly improved actual service life.

## Claims

1. A kiln furniture for use in a non-oxidizing atmosphere, wherein the kiln furniture is made of a refractory having an aggregate portion containing SiC and an aggregate bonding portion containing from 5 to 25 mass% of Si₃N₄ and/or Si₂N₂O and containing from 0.12 to 3.0 mass% of inorganic oxides other than a silicon oxynitride and silicon oxide, from 0.5 to 6.7 mass% of SiO₂, and the rest of SiC, wherein the inorganic oxides contain, as elemental components thereof, from 0.06 to 1 mass% of Al, from 0.3 to 0.5 mass% of Fe, from 0.003 to 0.01 mass% of Ca, from 0.004 to 0.01 mass% of Ni , from 0.0008 to 0.01 mass% of Zr and from 0.5 to 3 mass% of O.

2. A kiln furniture for use in a non-oxidizing atmosphere according to claim 1, wherein the inorganic oxides are present in a major part of the aggregate bonding portion.

3. A kiln furniture for use in a non-oxidizing atmosphere according to claim 1 or 2, which has an open porosity of from 5 to 14%.

4. A kiln furniture for use in a non-oxidizing atmosphere according to any one of claims 1 to 3, which has a bending strength decreasing rate not exceeding 15%.

## Patentansprüche

1. Brennhilfsmittel zur Verwendung in einer nicht oxidierenden Atmosphäre, wobei das Brennhilfsmittel aus einem Feuerfestmaterial hergestellt ist mit einem SiC enthaltenden Aggregatanteil und einem Aggregatbindungsanteil, der von 5 bis 25 Massen-% Si₃N₄ und/oder Si₂N₂O enthält, und das von 0,12 bis 3,0-Massen-% andere anorganische Oxide als Siliziumoxynitrid und Siliziumoxid, von 0,5 bis 6,7 Massen-% an SiO₂, und den Rest an SiC enthält, wobei die anorganischen Oxide, als elementare Bestandteile davon, von 0,06 bis 1 Massen-% an Al, von 0,3 bis 0,5 Massen-% an Fe, von 0,003 bis 0,01 Massen-% an Ca, von 0,004 bis 0,01 Massen-% an Ni, von 0,0008 bis 0,01 Massen-% an Zr und von 0,5 bis 3 Massen-% an O enthalten.

2. Brennhilfsmittel zur Verwendung in einer nicht oxidierenden Atmosphäre nach Anspruch 1, wobei die anorganischen Oxide in einem Hauptteil des Aggregatbindungsanteils vorhanden sind.

3. Brennhilfsmittel zur Verwendung in einer nicht oxidierenden Atmosphäre nach Anspruch 1 oder 2, welches eine offene Porosität von 5 bis 14% aufweist.

4. Brennhilfsmittel zur Verwendung in einer nicht oxidierenden Atmosphäre nach einem der Ansprüche 1 bis 3, welches eine Biegefestigkeitsabnahmerate aufweist, die 15% nicht übersteigt.

## Revendications

1. Accessoires d'enfournement destinés à une utilisation dans une atmosphère non oxydante, dans lesquels les accessoires d'enfournement sont constitués d'un réfractaire ayant une partie d'agrégats contenant du SiC et une partie de liaison d'agrégats contenant de 5 à 25% en masse de Si₃N₄ et/ou de Si₂N₂O et contenant de 0,12 à 3,0% en masse d'oxydes inorganiques autres qu'un oxynitrure de silicium et un oxyde de silicium, de 0,5 à 6,7% en masse de SiO₂, et le reste de SiC, dans lesquels les oxydes inorganiques contiennent, comme composants élémentaires de ceux-ci, de 0,06 à 1% en masse d'Al, de 0,3 à 0,5% en masse de Fe, de 0,003 à 0,01% en masse de Ca, de 0,004 à 0,01% en masse de Ni, de 0,0008 à 0,01% en masse de Zr et de 0,5 à 3% en masse de O.

2. Accessoires d'enfournement destinés à une utilisation dans une atmosphère non oxydante selon la revendication 1, dans lesquels les oxydes inorganiques sont présents dans une part majoritaire de la partie de liaison d'agrégats.

3. Accessoires d'enfournement destinés à une utilisation dans une atmosphère non oxydante selon la revendication 1 ou 2, qui ont une porosité ouverte de 5 à 14%.

4. Accessoires d'enfournement destinés à une utilisation dans une atmosphère non oxydante selon l'une quelconque des revendications 1 à 3, qui ont un taux de diminution de résistance à la flexion n'excédant pas 15%.
